# EUROPEAN PATENT SPECIFICATION

(11) **EP 2 309 787 B1**
(45) Date of publication and mention of the grant of the patent: **12.02.2014**
(21) Application number: 09799960.1
(22) Date of filing: 30.06.2009
(51) Int. Cl.: H04W 16/00

(54) **DOWNLINK RECEIVING STATUS FEEDBACK METHOD**
VERFAHREN FÜR EIN DOWNLINK-EMPFANGSSTATUS-FEEDBACK
PROCÉDÉ DE RENVOI D'INFORMATIONS D'ÉTAT DE RÉCEPTION EN VOIE DESCENDANTE

(30) Priority: 25.07.2008 CN 200810133275
(43) Date of publication of application: 13.04.2011
(73) Proprietor: ZTE Corporation, Shenzhen, Guangdong 518057 (CN)
(72) Inventor: YU, Bin, Shenzhen Guangdong 518057 (CN); DU, Zhongda, Shenzhen Guangdong 518057 (CN)
(74) Representative: Bittner, Bernhard
(86) International application number: PCT/CN2009/072556
(87) International publication number: WO 2010/009645

(56) References cited:
- WO-A1-2008/084927
- CN-A- 101 114 868
- US-A1- 2008 101 211
- TEXAS INSTRUMENTS: "Multiple ACK/NAK Transmission in TDD", 3GPP DRAFT; R1-082489, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080625, 25 June 2008 (2008-06-25), XP050110759, [retrieved on 2008-06-25]
- TEXAS INSTRUMENTS: "ACK/NAK DTX Detection with ACK/NAK Bundling in TDD", 3GPP DRAFT; R1-081985; 3RD GENERATION PARTNERSHIP PROJECT (3GPP); TECHNICALSPECIFICATION GROUP (TSG) RADIO ACCESS NETWORK (RAN); WORKINGGROUP 1 (WG1) , vol. RAN WG1, no. Kansas City, USA; 20080514 29 April 2008 (2008-04-29), pages 1-7, XP002549274, Retrieved from the Internet: URL:http://list.etsi.org/scripts/wa.exe?A2 =ind0804&L=3gpp_tsg_ran_wg1&T=0 &O=D&p=76969 [retrieved on 2009-10-08]
- ERICSSON: "Uplink transmission of ACK/NACK for E-UTRA TDD", 3GPP DRAFT; R1-071894, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20070417, 17 April 2007 (2007-04-17), XP050111798, [retrieved on 2007-04-17]
- NOKIA & NOKIA SIEMENS NETWORKS: "Multi-ACK transmission in PUCCH for TDD", 3GPP DRAFT; R1-080316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080109, 9 January 2008 (2008-01-09), XP050108837, [retrieved on 2008-01-09]

## Description

### TECHNICAL FIELD

The present disclosure relates to the field of wireless communication, and in particular to a downlink receiving status feedback method.

### BACKGROUND

Texas Instruments discloses the following features in "Multiple ACK/NAK Transmission in TDD", 3GPP Draft; R1-082489, vol. RAN WG1, no. Warsaw, 25.6.2008, XP050110759: "One property of TDD is that the number of UL and DL subframes can be different. In the configurations where there are more DL subframes than UL subframes, multiple DL subframes are associated with one single UL subframe, for the transmission of corresponding control signal. For example, for each dynamically scheduled transmission in the DL suhframes, ACK/NAK bits needs to be transmitted in an associated ULsuhframe to support proper hybrid ARQ (HARQ) operation. If a UE is scheduled iu a multiple of DL subframes, which are all associated with one UL subframe, the UE needs to transmit multiple ACKINAK bits in that UL subframe. ACK/NAK bundling is supported to resolve the issue of coverage. On the other hand, ACK/NAK bundling causes unnecessary retransmission, since all packets in the bundling window are retransmitted if there is one packet received incorrectly. Consequently, adopting ACK/NAK bundling across system reduces DL throughput. Therefore, multiple ACK/NAK transmission shall be supported in TDD, in addition to ACK/NAK bundling. In LTE TDD, there could be 1, 2, 3, 4, or 9 DL subframes associated with 1 UL subframe. Therefore, the number of ACK/NAK bits to be transmitted in the UL subframe can be 1, 2, 3, 4, 6, 8, 9, or 18. Apparently, to support such a dynamic range of number of ACK/NAK is no desirable, from the ACK/NAK detection performance point of view. Overall, the maximum number of multiple ACK/NAK bits is 4. For DL MIMO mode in DL/UL ratio of 3 or 4, ACK/NAK sub-bundling is proposed to reduce the number of multiple ACK/NAK bits. In addition, we propose to have 2 states for each ACK/NAK bit, i.e. ACK or NAK/DTX. For the DL subframes in which UE does not detect DL grant, NAK is transmitted for the corresponding DL subframes".

Texas Instruments discloses the following features in "ACK/NAK DTX Detection with ACK/NAK Bundling in TDD", 3GPP Draft; R1-081985, vol. RAN WG1, no. Kansas City,29.4.2008, pages 1-7, XP002549274: "the transmission of multiple ACK/NAK bits in one subframe may reduce ACK/NAK coverage. One solution to reduce the number of ACK/NAK bits a UE needs to transmit is ACK/NAK bundling [2I. Typically, UE compresses the multiple ACK/NAK bits into 1 or 2 ACK/NAK bits, which are subsequently transmitted in the corresponding UL subframe. A common ACK/NAK bundling rule is that if all ACK/NAK bits are "ACK", then one "ACK" bit is transmitted in the UL subframe, to acknowledge all received packets in multiple DL subframes. Otherwise, one "NAK" bit is transmitted in the UL subframe to request retransmission of all DL packets".

Ericsson discloses the following features in "Uplink transmission of ACK/NACK for E- UTRA TDD", 3GPP Draft; R1-071894, vol. RAN WG1 , no. Beijing, 17.4.2007, XP050111798: "the present contribution considers non-data associated uplink transmission of ACK/KACK in response to downlink transmission on the DL-SCH for E-UTRA TDD. Since there in the general case is no one-to-one association between UL and DL subframes, a UE may need to transmit more than one ACK/NACK, or in the MIMO case two ACK/NACKs in an UL subframe. In order to reduce the amount of resources reserved for UL transmission of ACK/NACKs and at the same time not impose limitations on scheduling or restrict the possible allocations of subframes to UL and DL, it is proposed to concatenate the ACK/NAK bits into a smaller number of bits. In summary, for TDD, it is preferred to have more than one or two bits for ACK/NAK feedback in an UL subframe per UE, but rather for example four or eight bits. The exact number needs to be further considered. If a UE needs to transmit more ACK/NACKs than there are bits available in an UL subframe, it is proposed that UE employs some form of encoding to concatenate the ACK/NACKs into the number of bits available. If a UE needs to transmit less ACK/NACKs than there are bits available, it is proposed that the ACK/NACKs are encoded with some form of redundancy. The point to be made is that for TDD, unless constraints on allocation of subframes to UL and DL or scheduling are to be imposed, a UE may need to transmit more than one or two (for the MIMO case) ACK/NACKs in an UL subframe. In fact, for the case that all subframes but one is allocated to DL transmission, up to 12 or 18 ACK/NACKs may be present for the generic and alterative frame structures respectively".

From the 3GPP draft "Multi-ACK transmission in PUCCH for TDD", R1-080316, viol. RAN WG1, no. Sevilla, 9.1.2008, XP050108837 by Nokia & Nokia Siemens Networks, it is known that, given a desired bit error rate, the required signal-to-noise ratio SNR on the uplink increases with the number of ACK/NACK bits to be fed back. This causes a coverage problem for a user equipment at the edge of a cell where the SNR requirement for multi-bit ACK/NACK feedback cannot be met. To address this problem, the draft suggests as one possibility to reduce the number of feedback bits to a single bit through the use of ACK/NACK bundling for downlink heavy cases.

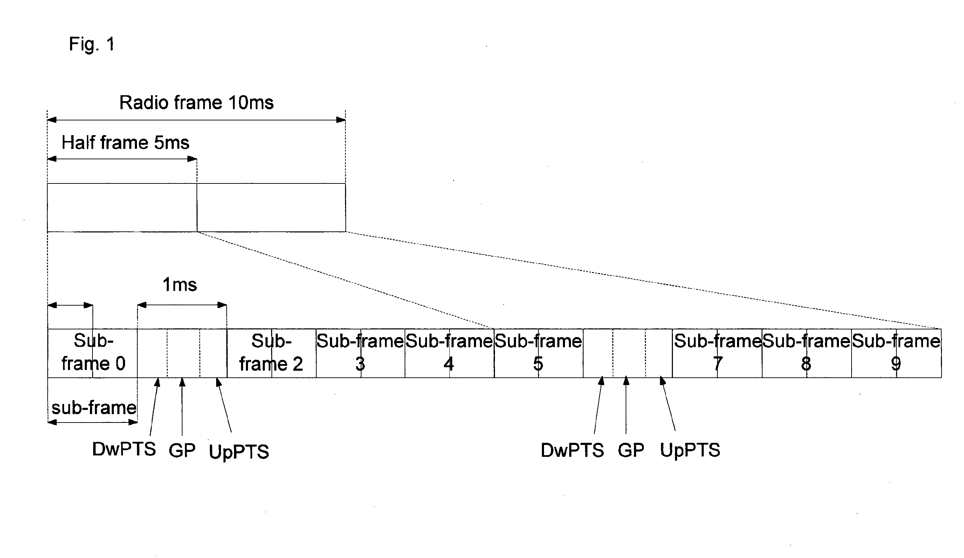

Fig. 1 shows a frame structure in a time division duplex (TDD) mode in a long term evolution (LTE) system, in which a radio frame of 10ms is divided into two half-frames, each half-frame is divided into 10 time slots equally of 0.5ms, and two time slots form a sub-frame of 1 ms. One half-frame includes 5 sub-frames. In the frame structure, the configuration of the sub-frame has the following characteristics:
(1) sub-frame 0 is always reserved for downlink;
(2) sub-frame 1 (hereinafter referred to as a special sub-frame) includes 3 special time slots which are a downlink pilot time slot (DwPTS), a guard period (GP) and an uplink pilot time slot (UpPTS), wherein
   DwPTS is used for downlink and capable of transmitting primary-synchronization channel (P-SCH) signals, physical downlink shared channel (PDSCH) signals and the like;
   GP is guard time, in which no data is transmitted;
   UpPTS is used for uplink and capable of transmitting random access channel (RACH) signals, sounding reference signals and the like;
(3) sub-frame 2 is always reserved for uplink transmission.

The frame structure can support various configurations of different uplink/downlink ratio, the following Table 1 shows 7 kinds of uplink/downlink sub-frame configurations provided by the current LTE TDD, wherein DL/D represents downlink, UUU represents uplink, and S represents a special sub-frame. For instance, in configuration 1, sub-frame 2, 3, 7 and 8 are used for uplink transmission, sub-frame 0, 4, 5 and 9 are used for downlink transmission, and part symbols in DwPTS of special sub-frame 1 and 6 are also used for downlink transmission.

**Table 1**

| DL/UL sub-frame configuration | Switch point periodicity | Sub-frame number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 10ms | D | S | U | U | U | D | S | U | U | D |

In the LTE TDD system, due to unavoidable hardware processing delay and TDD characteristic, transmission timing for downlink receiving status acknowledgement (ACK) and negative-acknowledgement (NACK) fed back in uplink, or transmission timing for discontinuous transmission (DTX for short, which may be fed back implicitly, or replaced by NACK, or fed back explicitly) status generated by the loss of a downlink control signaling, should be pre-configured. It is defined in the current LTE TDD that the receiving status feedback information ACK/NACK corresponding to a physical downlink shared channel (PDSCH) in a downlink sub-frame n should be fed back by a terminal in an uplink sub-frame of n+k (k > 3). The value of the variable k is determined by n and DL/UL sub-frame configuration, the following Table 2 shows the value of the uplink feedback timing index k corresponding to a downlink sub-frame n in different DL/UL sub-frame configurations.

**Table 2**

| DL/UL sub-frame configuration | Downlink sub-frame number n | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | - | - | - | 4 | 6 | - | - | - |
| 1 | 7 | 6 | - | - | 4 | 7 | 6 | - | - | 4 |
| 2 | 7 | 6 | - | 4 | 8 | 7 | 6 | - | 4 | 8 |
| 3 | 4 | 11 | - | - | - | 7 | 6 | 6 | 5 | 5 |
| 4 | 12 | 11 | - | - | 8 | 7 | 7 | 6 | 5 | 4 |
| 5 | 12 | 11 | - | 9 | 8 | 7 | 6 | 5 | 4 | 13 |
| 6 | 7 | 7 | - | - | - | 7 | 7 | - | - | 5 |

In the LTE TDD system, it can be seen from Table 1 that in some DUUL configurations there are more downlink sub-frames than uplink sub-frames, namely, an uplink sub-frame needs to feed back the ACK/NACK information corresponding to PDSCHs in multiple downlink sub-frames, the following Table 3 shows the possible maximum number of the ACK/NACK messages corresponding to PDSCHs which needs to be fed back in each uplink sub-frame when the DUUL sub-frame configuration is as shown in Table 1.

**Table 3**

| DUUL sub-frame configuration | Switch point periodicity | Sub-frame number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | - | - | 1 | 0 | 1 | - | - | 1 | 0 | 1 |
| 1 | 5ms | - | - | 2 | 1 | - | - | - | 2 | 1 | - |
| 2 | 5ms | - | - | 4 | - | - | - | - | 4 | - | - |
| 3 | 10ms | - | - | 3 | 2 | 2 | - | - | - | - | - |
| 4 | 10ms | - | - | 4 | 4 | - | - | - | - | - | - |
| 5 | 10ms | - | - | 9 | - | - | - | - | - | - | - |
| 6 | 10ms | - | - | 1 | 1 | 1 | - | - | 1 | 1 | - |

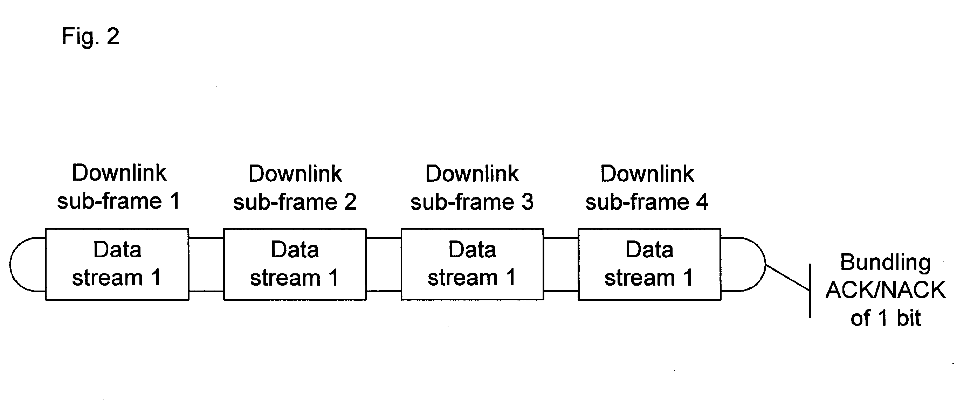

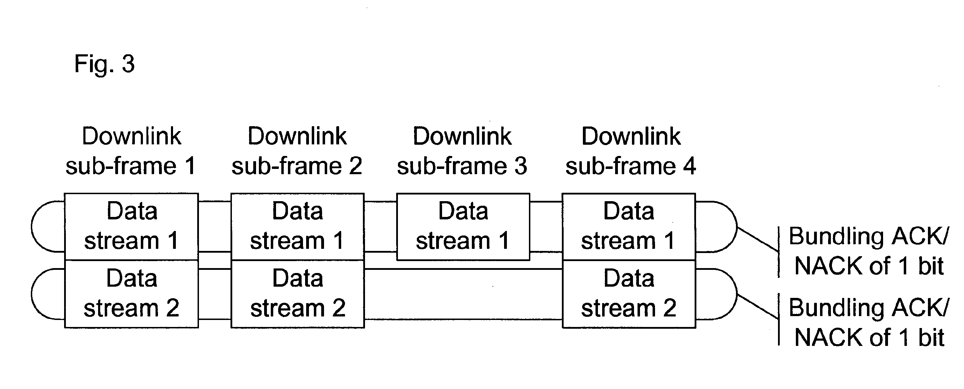

As LTE uplink should meet the characteristic of single carrier, a problem which is must be solved is how to feed back the ACK/NACK information corresponding to receiving status over PDSCHs in multiple downlink sub-frames on one physical uplink control channel (PUCCH) resource when the number of downlink sub-frames is configured to be more than the number of uplink sub-frames. Herein, the PUCCH resource refers to a minimum physical resource for carrying an uplink control signaling, namely, a physical resource block (RB) defined in the current LTE. Additionally, it is defined in the LTE system that the downlink receiving status ACK/NACK is transmitted over a physical uplink shared channel (PUSCH) when a terminal has distributed PUSCH resources for a feedback sub-frame, and similarly, it should still be considered how to feed back the ACK/NACK information corresponding to receiving status over PDSCHs in multiple downlink sub-frames over the PUSCH occupied by the terminal. In order to solve the problem existing in the terminal of the LTE TDD system of transmitting multiple ACK/NACK bits in one sub-frame, the current LTE TDD system introduces an acknowledgement information bundling (ACK/NACK bundling) feedback mode for multiple downlink sub-frames, namely, according to the defined uplink/downlink transmission timing relation, the data receiving status information ACK/NACK corresponding to PDSCHs in multiple downlink scheduling sub-frames which needs to be fed back by a terminal in one uplink sub-frame are bundled, and for a spatial data stream (also known as codeword stream) a logic "AND" operation is performed on the receiving status information corresponding to multiple downlink sub-frames to form a bundled ACK/NACK bit as the feedback on multiple downlink receiving status (at most one ACK/NACK bit can be fed back in the uplink sub-frame as the feedback on multiple downlink data receiving status). As shown in Fig. 2, when the PDSCH adopts single-stream transmission, a logic "AND" operation is performed on the ACK/NACK bits corresponding to multiple downlink sub-frames to produce one ACK/NACK bit to transmit; and format 1a (PUCCH format 1a) defined in the LTE system can be used if PUCCH transmission is adopted. As shown in Fig. 3, when PDSCH adopts dual-stream transmission, for each codeword stream, a logic "AND" operation is performed on ACK/NACK corresponding to multiple downlink sub-frames to produce one bundled ACK/NACK bit, then the two bits produced by the dual-streams may adopt a format 1b (PUCCH format 1b) in PUCCH transmission.

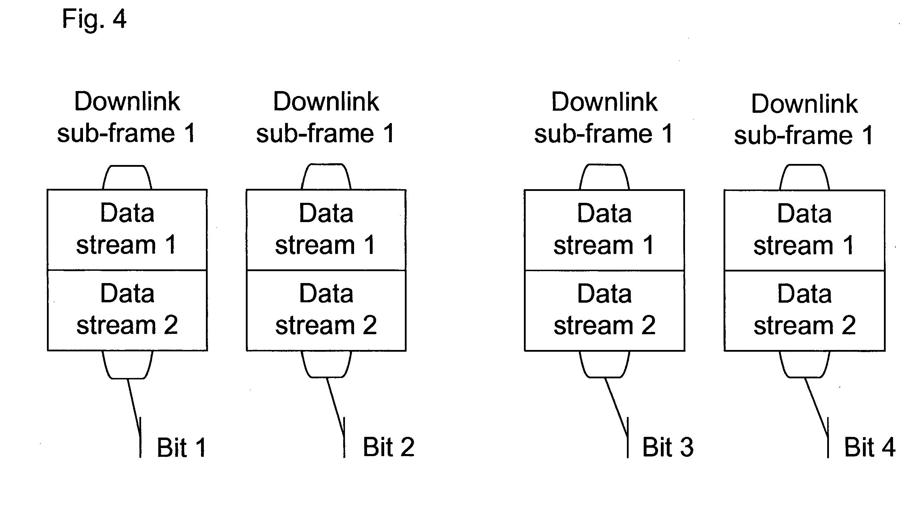

However, the adoption of the ACK/NACK bundling brings about a lot of unnecessary retransmission and seriously lowers system throughput. That is, as long as the PDSCH in only one downlink sub-frame corresponds to an acknowledgement message of NACK, result is NACK, then the base station needs to retransmit PDSCH data in all downlink sub-frames for a terminal; and only if the acknowledgement messages to which the PDSCHs in all downlink sub-frames correspond are all ACK, the result is ACK, which indicates that the PDSCHs in all downlink sub-frames are correctly received. In order to improve system throughput to meet the requirement on frequency spectrum utilization rate, it is absolutely necessary to consider, based on the ACK/NACK bundling, an acknowledgement information multiplexing (ACK/NACK multiplexing) feedback mode for multiple downlink sub-frames, in which when a terminal needs to feed back the receiving status information ACK/NACK corresponding to PDSCHs in multiple sub-frames in one uplink sub-frame, the ACK/NACK bits corresponding to different downlink sub-frames are synchronously transmitted in one uplink sub-frame by certain means of multiplexing; and when the terminal needs to feed back the receiving status corresponding to multiple downlink sub-frames in one uplink sub-frame, it feeds back the receiving status corresponding to each downlink sub-frame separately in the uplink sub-frame by means of multiplexing instead of performing any "AND" operation on the receiving status corresponding to different downlink sub-frames. As shown in Fig. 4, when a terminal needs to feed back ACK/NACK corresponding to 4 downlink PDSCHs in certain uplink sub-frame, each downlink PDSCH may correspond to one ACK/NACK bit (only 1 bit is fed back if dual-stream is adopted, and bundling should be carried out first if spatial codeword stream is adopted), and the 4 ACK/NACK bits may be multiplexed on PUCCH or PUSCH by means of code division and the like.

However, the disadvantage of ACK/NACK multiplexing is that the uplink coverage is limited when the ACK/NACK bits multiplexed on PUCCH are increased. Considering both uplink coverage and throughput, it is concluded that the LTE TDD system had better support two feedback modes of multiple ACK/NACK bits, namely, the ACK/NACK bundling mode for multiple downlink sub-frames and the ACK/NACK multiplexing mode for multiple downlink sub-frames, and in each of the two modes, only one feedback mechanism needs to be defined in order to reduce control signaling overhead, and the system can choose one mode of the two. It is known from the analysis above that if the LTE TDD system supports the two modes, there must be an effective way in the system for configuring the two modes to improve the performance and the efficiency of the LTE TDD system.

### SUMMARY

The present disclosure aims to provide a downlink receiving status feedback method, which makes a system flexibly configure an appropriate mode to feed back downlink receiving status.

In order to address the problem above, the disclosure provides a downlink receiving status feedback method.

The features of the method according to the disclosure are defined in the independent claim, and the preferable features according to the disclosure are defined in the dependent claims.

Compared with the prior art, the disclosure enables a system to flexibly configure an appropriate mode to feed back downlink receiving status, and a base station can configure an ACK/NACK bundling mode or an ACK/NACK multiplexing mode for any UE in a cell; for a UE located at edge of a cell or having weak feedback signal, the base station indicates, according to its own determining criterion, the UE which needs to feed back multiple ACK/NACK bits to use the ACK/NACK bundling to guarantee the uplink signal receiving performance when the UE feeds back downlink receiving status, while indicates a UE located in the center of the cell or having excellent channel condition to use ACK/NACK multiplexing to increase throughput.

### BRIEF DESCRIPTION OF THE DRAWINGS

Fig. 1 is a figure of a frame structure adopted by the LTE TDD in the prior art;
Fig. 2 is a figure of the realization of the multiple ACK/NACK bits feedback using ACK/NACK bundling in the case of single-stream;
Fig. 3 is a figure of the realization of the multiple ACK/NACK bits feedback using ACK/NACK bundling in the case of dual-stream;
Fig. 4 is a figure of ACK/NACK multiplexing in the case of dual-stream;
Fig. 5 is a signaling flowchart for a base station to configure a downlink receiving status feedback mode of a terminal in an embodiment of the disclosure;
Fig. 6 is a diagram of the application of the disclosure.

### DETAILED DESCRIPTION

In order to overcome the shortcomings of the conventional technical scheme, a downlink receiving status feedback method of the disclosure is further described by referring to the following embodiments, and the content hereinafter is for describing the embodiments in detail but not for limiting the disclosure.

The disclosure is applicable to the case in which there are more downlink sub-frames than uplink sub-frames in DUUL sub-frame configuration in the LTE TDD system, that is, applicable to the case in which an uplink sub-frame may need to feed back multiple downlink receiving status, namely, the DL/UL sub-frame configuration in the LTE TDD system is shown in items numbered 1-5 (referring to Table 1).

First, a system sets a control parameter carried in an RRC signaling (for example, RRC connection reconfiguration message, RRC connection setup message and the like) to inform a terminal of a feedback mode used for a downlink receiving status feedback when a base station transmits downlink data to the terminal.

The base station determines a feedback mode used for a downlink receiving status feedback according to uplink signal quality of the terminal; and the uplink signal quality may be obtained by existing means, for example, obtained according to uplink signal intensity parameter.

For a UE located at edge of a cell or having weak uplink signal (uplink signal quality is lower than a preset threshold), the base station indicates the UE to use an ACK/NACK bundling mode via the control parameter to guarantee uplink signal receiving performance when UE feeds back downlink receiving status, and the base station indicates a UE located in the center of the cell or having excellent channel condition (uplink signal quality is equal to or higher than the present threshold) to use an ACK/NACK multiplexing via the control parameter to increase throughput.

In specific application the control parameter is carried in PUCCH configuration information element of the current structure in an RRC connection reconfiguration message or an RRC connection setup message; and the PUCCH dedicated configuration information element is a terminal-dedicated information element.

For instance, if the parameter is set to be 1 bit, 0 represents the adoption of the ACK/NACK bundling and 1 represents the adoption of the ACK/NACK multiplexing; or 0 represents the adoption of the ACK/NACK multiplexing and 1 represents the adoption of the ACK/NACK bundling. The value-taking manner of the feedback mode control parameter has no limitation on the present patent. The following embodiments are described based on the first value-taking manner: 0 represents the adoption of ACK/NACK bundling, and 1 represents the adoption of ACK/NACK multiplexing.

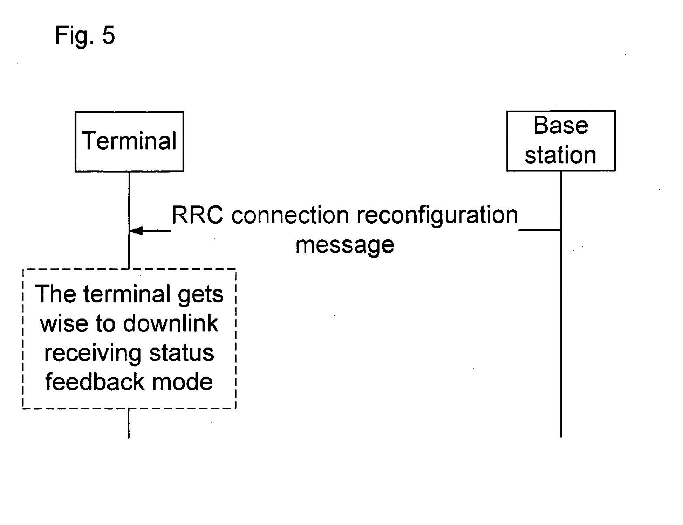

Fig. 5 is a signaling flowchart for a base station to configure a downlink receiving status feedback mode of a terminal in an embodiment of the disclosure. When the base station in a cell schedules PDSCHs in multiple downlink sub-frames to a UE, the UE gets wise to feedback mode it should adopt by receiving and reading a control parameter contained in an RRC signaling (for example, RRC connection reconfiguration message, RRC connection setup message and the like) transmitted from the base station and performs feedback in a given uplink sub-frame according to the uplink feedback timing relation (shown in Table 2 and Table 3) and the known feedback mode.

The disclosure is described by reference to the following application example. An uplink feedback timing relation (referring to Table 2) is pre-configured in the LTE TDD system, and a UE gets wise to configurations of uplink sub-frames and downlink sub-frames according to system information transmitted from a base station (referring to Table 1 and taking the DL/UL sub-frame configuration numbered 4 for example).

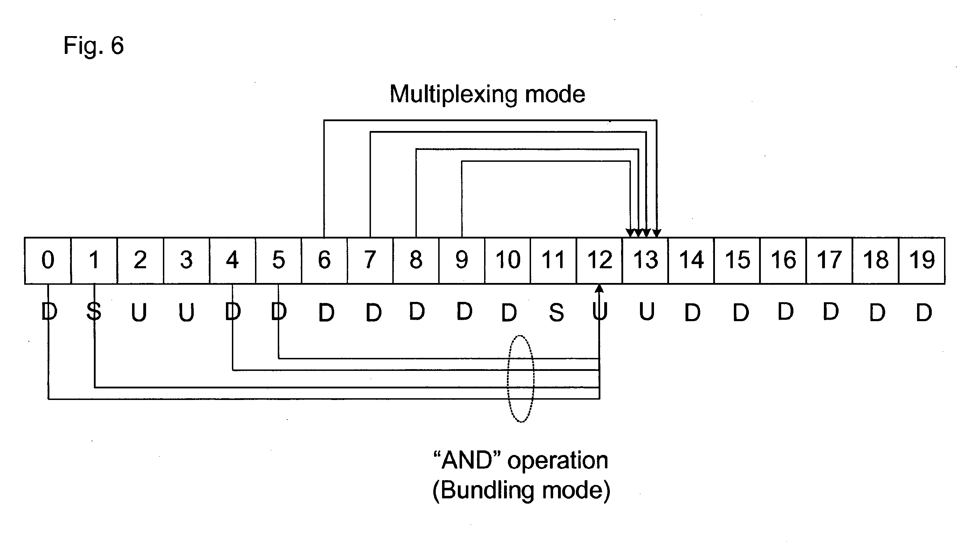

As shown in Fig. 6 (for the sake of explanation, the sub-frames of two radio frames are numbered in the figure, namely, 20 sub-frames are numbered from 0-19), providing that all PDSCHs in downlink sub-frame 0, 1, 4 and 5 are scheduled for data transmission of UE1 and single-stream transmission is adopted, and PDSCHs in downlink sub-frames 6, 7, 8 and 9 are scheduled for data transmission of UE2 and single-stream transmission is adopted, the UE generates a downlink receiving status ACK/NACK message of 1 bit according to receiving situation of the PDSCH in each sub-frame.

UE1 gets wise to the value of feedback mode control parameter being 0 by receiving and reading a control parameter in an RRC connection reconfiguration message, that is, UE1 should adopt bundling mode, then UE1 performs a logic "AND" operation on uplink sub-frame 12 to combine downlink receiving status ACK/NACK messages of 4 bits into an ACK/NACK of 1 bit according to a system-defined feedback timing relation (referring to DL/UL sub-frame configuration numbered 4 in Table 2, the value of n+K of each of sub-frame 0, 1, 4 and 5 is 12) and feeds back the combined ACK/NACK. Here, if receiving status corresponding to one downlink sub-frame is NACK, the UE feeds back a NACK of 1 bit by performing a logic "AND" operation, and the base station retransmits data which is previously transmitted in the 4 downlink sub-frames. It is apparent that the bundling mode, which may cause unnecessary retransmission and lower throughout, is applicable to cell-edge users.

UE2 gets wise to the value of feedback mode control parameter being 1 by receiving and reading a control parameter in an RRC connection reconfiguration message, that is, UE2 should adopt multiplexing mode, then UE2 feeds back downlink receiving status ACK/NACK messages of 4 bits in uplink sub-frame 13 by using existing multiplexing method (for example time division multiplexing, space division multiplexing and the like) according to a feedback timing relation (referring to DL/UL sub-frame configuration numbered 4 in Table 2, the value of n+K of each of sub-frame 6, 7, 8 and 9 is 13) pre-defined by the system. If the receiving status corresponding to downlink sub-frame 6 is NACK, data in downlink sub-frame 6 is retransmitted, causing no influence on downlink sub-frame 7, 8 and 9. It is apparent that the multiplexing mode does not lower throughout seriously but the multiplexing of multiple ACK/NACK bits decreases uplink coverage.

Thus, by adding a feedback mode control parameter into an RRC dedicated signaling, the base station may flexibly configure a feedback mode for each UE in a cell to make a feedback mode control be UE-specific, so that the throughout and the coverage performance of a system are balanced well.

Of course, the present disclosure may have numbers of other embodiments, various modifications and variations can be devised by those skilled in the art without departing from the scope of this disclosure, and it should be understood that the devised modification and variations belong to the protection scope of the claims disclosed herein.

### INDUSTRIAL APPLICABILITY

According to the downlink receiving status feedback method of the disclosure, a system may flexibly configure an appropriate mode to feed back downlink receiving status. By applying the method, an LTE TDD system can support an ACK/NACK bundling feedback mode for multiple downlink sub-frames and an ACK/NACK multiplexing feedback mode for multiple downlink sub-frames, in each of which only one feedback mechanism is defined to reduce control signaling overhead, thus the disclosure improves the performance and the efficiency of the LTE TDD system, avoids unnecessary retransmission, and increases system throughout.

## Claims

1. A downlink receiving status feedback method, comprising:
carrying a control parameter, which is used for indicating a feedback mode used for a terminal to feeding back downlink receiving status, in a radio resource control (RRC) signaling which is to be transmitted to the terminal by a base station; and
the terminal feeding data receiving status corresponding to physical downlink shared channels (PDSCHs) in multiple downlink sub-frames back to the base station in one uplink sub-frame according to the feedback mode, and a timing relation of an uplink feedback with the downlink sub-frames, which is defined by a TDD communication system including the terminal and the base station based on current configurations of uplink sub-frames and downlink sub-frames,
wherein the feedback mode is an acknowledgement information bundling (ACK/NACK bundling) mode for multiple downlink sub-frames or an acknowledgement information multiplexing (ACK/NACK multiplexing) mode for multiple downlink sub-frames,
**characterized in that**, the method further comprises:
the base station determining the feedback mode used for the downlink receiving status feedback according to uplink signal quality of the terminal, and if the uplink signal quality is lower than a preset threshold, according to the control parameter the base station indicating the terminal to use the ACK/NACK bundling mode for multiple downlink sub-frames when it feeds back the downlink receiving status; and
if the uplink signal quality is equal to or higher than the preset threshold, according to the control parameter the base station indicating the terminal to use the ACK/NACK multiplexing mode for multiple downlink sub-frames when it feeds back the downlink receiving status,
wherein the uplink signal quality is represented by uplink signal intensity,
wherein the RRC signaling includes an RRC connection reconfiguration message and an RRC connection setup message,
wherein the control parameter is carried in a PUCCH dedicated configuration information element of an RRC connection reconfiguration message or an RRC connection setup message, and
wherein the base station sets a control parameter of 1 bit and each of two possible values of the control parameter represents a respective feedback mode used for the downlink receiving status feedback.

2. The method according to claim 1, further comprising:
after receiving the control parameter indicating the ACK/NACK bundling mode for multiple downlink sub-frames, according to the current configurations of uplink sub-frames and downlink sub-frames, the terminal looking up an uplink sub-frame for feedback in a feedback timing relation table pre-defined by the system; and
the terminal performing a logic "AND" operation on data receiving status ACK/NACK information corresponding to PDSCHs in multiple downlink sub-frames to bundle the information into ACK/NACK information of 1 bit, and transmitting the ACK/NACK bit to the base station in a corresponding uplink sub-frame.

3. The method according to claim 1, further comprising:
after receiving the control parameter indicating the ACK/NACK multiplexing mode for multiple downlink sub-frames, according to the current configurations of uplink sub-frames and downlink sub-frames, the terminal looking up an uplink sub-frame for feedback in a feedback timing relation table pre-defined by the system; and
the terminal transmitting data receiving status ACK/NACK information corresponding to PDSCHs In multiple downlink sub-frames in a corresponding uplink sub-frame to the base station by means of multiplexing.

4. The method according to claim 1, wherein the downlink receiving status feedback method is applied to time division duplex mode in a long term evolution system in which there are more downlink sub-frames than uplink sub-frames.

## Patentansprüche

1. Ein Downlink-Empfangsstatus-Feedback-Verfahren, umfassend:
Übertragen eines zu übermittelnden Steuerparameters, der für das Indizieren eines Feedback-Modus, der für einen Terminal zum Rückmelden des Downlink-Empfangsstatus verwendet wird, genutzt wird, in einer Radio Resource Control (RRC) Signalübertragung an den Terminal über eine Basisstation
und
Rückmelden des Terminals eines Datenempfangsstatus, der Physical-Downlink-Shared-Channels (PDSCHs) in multiplen Downlink Sub-Frames entspricht, an die Basisstation in einem Uplink Sub-Frame entsprechend dem Feedback-Modus, und eines Zeitbezuges eines Uplink Feedbacks mit den Downlink Sub-Frames, welches durch ein TDD Datenübermittlungssystem, einschließlich des Terminals und der Basisstation, definiert ist, basierend auf der momentanen Konfigurationen von Uplink Sub-Frames und Downlink Sub-Frames,
wobei der Feedback-Modus ein Bestätigungs-Informationsbündelungs- (ACK/NACK bundling-) Modus für multiple Downlink Sub-Frames oder ein Bestätigungs-Informationsmultiplexing- (ACK/NACK multiplexing-) Modus für multiple Downlink Sub-Frames ist,
**dadurch gekennzeichnet, dass** das Verfahren weiterhin folgendes umfasst:
die Basisstation den Feedback-Modus, der für das Downlink-Empfangsstatus-Feedback genutzt wird, entsprechend einer Uplink-Signal-Qualität des Terminals bestimmt und wenn die Uplink-Signal-Qualität niedriger als ein vorbestimmter Schwellwert, entsprechend des Steuerparameters ist, die Basisstation den Terminal hinweist, den ACK/NACK bundling-Modus für multiple Downlink Sub-Frames zu nutzen, wenn der Terminal die Downlink-Empfangsstatus rückmeldet;
und
wenn die Uplink-Signal-Qualität gleich hoch oder höher als der vorbestimmte Schwellwert entsprechend des Steuerparameters ist, die Basisstation den Terminal hinweist den ACK/NACK multiplexing-Modus für multiple Downlink Sub-Frames zu nutzen, wenn der Terminal die Downlink-Empfangsstatus rückmeldet,
wobei die Uplink-Signal-Qualität durch eine Uplink-Signal-Intensität dargestellt ist,
wobei die RRC Signalübertragung eine RRC-Verbindungsrekonfigurations-Meldung und
eine RRC-Verbindungsaufbau-Meldung beinhaltet,
wobei der Steuerparameter in einem PUCCH dedizierten Konfigurationsinformations-Element einer RRC-Verbindungsrekonfigurations-Meldung oder einer RRC-Verbindungsaufbau-Meldung übertragen wird, und
wobei die Basisstation einen Steuerparameter von 1 Bit festlegt und jeder der zwei möglichen Werte des Steuerparameters einen jeweiligen Feedback-Modus darstellt, der für das Downlink-Empfangsstatus-Feedback genutzt wird.

2. Verfahren nach Anspruch 1, wobei weiterhin:
nach Empfangen des Steuerparameters, der den ACK/NACK bundling-Modus für multiple Downlink Sub-Frames, entsprechend der momentanen Konfiguration von Uplink Sub-Frames und Downlink Sub-Frames, angibt, der Terminal ein Uplink Sub-Frame für Feedback in einer Feedback-Zeitbezug-Tabelle, vordefiniert durch das System, nachschlägt; und
der Terminal eine logische "UND" Operation für Datenempfangsstatus-ACK/NACK-Informationen entsprechend PDSCHs in multiplen Downlink Sub-Frames ausführt, um die Informationen in ACK/NACK-Informationen von 1 Bit zu bündeln, und das ACK/NACK Bit an die Basisstation in einem entsprechenden Uplink Sub-Frame übermittelt.

3. Verfahren nach Anspruch 1 wobei weiterhin:
nach Empfangen des Steuerparameters, der den ACK/NACK multiplexing-Modus für multiple Downlink Sub-Frames, entsprechend der momentanen Konfiguration von Uplink Sub-Frames und Downlink Sub-Frames, angibt, der Terminal ein Uplink Sub-Frame für Feedback in einer Feedback-Zeitbezug-Tabelle, vordefiniert durch das System, nachschlägt; und
der Terminal Datenempfangsstatus-ACK/NACK-Informationen entsprechend PDSCHs in multiplen Downlink Sub-Frames in einer einem entsprechenden Uplink Sub-Frame an die Basisstation mittels Multiplexing übermittelt.

4. Verfahren nach Anspruch 1,
wobei
das Downlink-Empfangsstatus-Feedback-Verfahren bei Time- Division-Duplex-Modus in einem Long-Term-Evolution-System angewandt wird, in welchem es mehr Downlink Sub-Frames als Uplink Sub-Frames gibt.

## Revendications

1. Procédé de réinjection de statut de réception de liaison descendante, comprenant :
l'acheminement d'un paramètre de contrôle, qui est utilisé pour indiquer un mode de réinjection utilisé pour un terminal pour réinjecter un statut de réception de liaison descendante, dans une signalisation de contrôle de ressources radio (RRC) qui doit être transmise au terminal par une station de base ; et
le terminal réinjectant le statut de réception de données correspondant à des canaux partagés de liaison descendante physiques (PDSCH) dans de multiples sous-trames de liaison descendante à la station de base dans une sous-trame de liaison montante selon le mode de réinjection, et une relation temporelle d'une réinjection de liaison montante avec les sous-trames de liaison descendante, qui est définie par un système de communication TDD comprenant le terminal et la station de base sur la base de configurations actuelles de sous-trames de liaison montante et de sous-trames de liaison descendante,
dans lequel le mode de réinjection est un mode de groupage d'informations d'accusé de réception (groupage ACK/NACK) pour de multiples sous-trames de liaison descendante ou un mode de multiplexage d'informations d'accusé de réception (multiplexage ACK/NACK) pour de multiples sous-trames de liaison descendante,
**caractérisé en ce que** le procédé comprend en outre :
la station de base déterminant le mode de réinjection utilisé pour la réinjection de statut de réception de liaison descendante en fonction de la qualité de signal de liaison montante du terminal, et si la qualité de signal de liaison montante est inférieure à un seuil préétabli, en fonction du paramètre de contrôle la station de base indiquant au terminal d'utiliser le mode de groupage ACK/NACK pour de multiples sous-trames de liaison descendante lorsqu'il réinjecte le statut de réception de liaison descendante ; et
si la qualité de signal de liaison montante est égale ou supérieure au seuil préétabli, en fonction du paramètre de contrôle la station de base indiquant au terminal d'utiliser le mode de multiplexage ACK/NACK pour de multiples sous-trames de liaison descendante lorsqu'il réinjecte le statut de réception de liaison descendante,
dans lequel la qualité de signal de liaison montante est représentée par l'intensité de signal de liaison montante,
dans lequel la signalisation RRC comprend un message de reconfiguration de connexion RRC et un message d'établissement de connexion RRC,
dans lequel le paramètre de contrôle est acheminé dans un élément d'information de configuration dédié PUCCH d'un message de reconfiguration de connexion RRC ou d'un message d'établissement de connexion RRC, et
dans lequel la station de base établit un paramètre de contrôle d'1 bit et chacune de deux valeurs possibles du paramètre de contrôle représente un mode de réinjection respectif pour la réinjection de statut de réception de liaison descendante.

2. Procédé selon la revendication 1, comprenant en outre :
après la réception du paramètre de contrôle indiquant le mode de groupage ACK/NACK pour de multiples sous-trames de liaison descendante, en fonction des configurations actuelles de sous-trames de liaison montante et de sous-trames de liaison descendante, le terminal recherchant une sous-trame de liaison montante pour la réinjection dans une table de relation temporelle de réinjection prédéfinie par le système ; et
le terminal effectuant une opération « ET » logique sur des informations ACK/NACK de statut de réception de données correspondant à des PDSCH dans de multiples sous-trames de liaison descendante pour regrouper les informations en informations ACK/NACK d'1 bit, et transmettant le bit ACK/NACK à la station de base dans une sous-trame de liaison montante correspondante.

3. Procédé selon la revendication 1, comprenant en outre :
après la réception du paramètre de contrôle indiquant le mode de multiplexage ACK/NACK pour de multiples sous-trames de liaison descendante, en fonction des configurations actuelles de sous-trames de liaison montante et de sous-trames de liaison descendante, le terminal recherchant une sous-trame de liaison montante pour la réinjection dans une table de relation temporelle de réinjection prédéfinie par le système ; et
le terminal transmettant des informations ACK/NACK de statut de réception de données correspondant à des PDSCH dans de multiples sous-trames de liaison descendante dans une sous-trame de liaison montante correspondante à la station de base au moyen de multiplexage.

4. Procédé selon la revendication 1, dans lequel le procédé de réinjection de statut de réception de liaison descendante est appliqué à un mode duplex à répartition dans le temps dans un système d'évolution à long terme dans lequel il y a plus de sous-trames de liaison descendante que de sous-trames de liaison montante.
